# EUROPEAN PATENT SPECIFICATION

(11) **EP 1 537 775 B1**
(45) Date of publication and mention of the grant of the patent: **15.08.2007**
(21) Application number: 04078061.1
(22) Date of filing: 09.11.2004
(51) Int. Cl.: A01J 5/017, G06T 7/00

(54) **A device for milking animals and a method for this purpose**
Vorrichtung und Verfahren zum Melken von Tieren
Dispositif et méthode pour la traite des animaux

(30) Priority: 03.12.2003 NL 1024934
(43) Date of publication of application: 08.06.2005
(73) Proprietor: Lely Enterprises AG, 6300 ZUG (CH)
(72) Inventor: van den Berg, Karel, 2971 BR Bleskensgraaf (NL)
(74) Representative: Corten, Maurice Jean F.M.

(56) References cited:
- WO-A-02/00011
- WO-A-98/19520
- WO-A-98/45808
- DE-A- 3 742 867
- US-A- 5 231 678

## Description

The invention relates to a milking device for milking animals according to the preamble of claim 1.

Such a milking device is known from the patent application WO0200011-A1. Herein a milking device is disclosed with a milking robot comprising an arm for connecting teat cups. A camera is movably connected on this arm. A light source illuminates a reference point on the animal which is identifiable in two successive images taken by said camera from two different positions. With this reference point in both images a three-dimensional udder pattern is generated. Problems occur when the animal moves.

The invention aims at providing an alternative milking device.

This is achieved by means of a milking device as mentioned above,
characterized in that the milking device comprises a sight within the detection range of the image sensor, the image analysis device being suitable for determining, on the basis of the image, an image distance between the image of the sight and the image of the teat and for emitting an image distance signal representative of the image distance, and in that the device comprises a position meter for determining the actual position of the teat relative to the frame on the basis of two image distance signals emitted from the first position, respectively the second position, and on the basis of the first and the second position.

According to a favourable embodiment of the invention, the image sensor is fastened to the arm. This has the advantage that the image sensor is capable of being moved, together with the arm, to under the animal and is thus capable of measuring close to the teats.

According to a further embodiment of the invention, the image sensor comprises a camera. By using a camera, it is possible to obtain a detailed image, on the basis of which an image of a teat can be determined easily.

It is advantageous if the teat cup comprises the sight. For this purpose, no separate construction is required. In particular the distance from the teat cup to the teat is relevant to the connection of the teat cup.

In a further advantageous embodiment, the milking device comprises several image sensors. By using several image sensors, teat positions can be measured with several combinations of image sensor and sight, which can ensure collectively a greater accuracy, for example by averaging all the measured teat positions.

According to again another embodiment of the invention, the milking device comprises means to relate the distance to the teat to the distance to the top of the teat. The top of the teat is a univocal point that is also easily detectable because it is locally the lowest point of the udder.

The invention also relates to a method of milking an animal by means of a milking robot provided with a teat cup, which milking robot comprises a displaceable image sensor for determining an image of a teat of the animal to be milked, the image sensor having a viewing direction, characterized in that the milking robot comprising a sight and the method further comprises the step of:
* taking a first image of the sight and the teat from a first position;
* determining a first image distance between the sight and the teat;
* moving the image sensor to a second position, which second position has a component transverse to the viewing direction;
* taking a second image of the sight and the image sensor;
* determining a second image distance between the sight and the teat;
* determining the actual distance between the teat and the image sensor on the basis of the first position, the first image distance, the second position and the second image distance;
* determining the teat position;
* moving the teat cup to the teat position;
* connecting the teat cup to the teat.

According to a favourable embodiment of the method, the image distance is determined between a specific point of the sight and a specific point of the teat, preferably the teat top.

The invention will now be explained in further detail with reference to an embodiment shown in the drawings.
Figure 1 is a side view of the milking device according to the invention;
Figure 2 is a diagram of an image taken in a first position, and
Figure 3 is a diagram of an image taken in a second position.

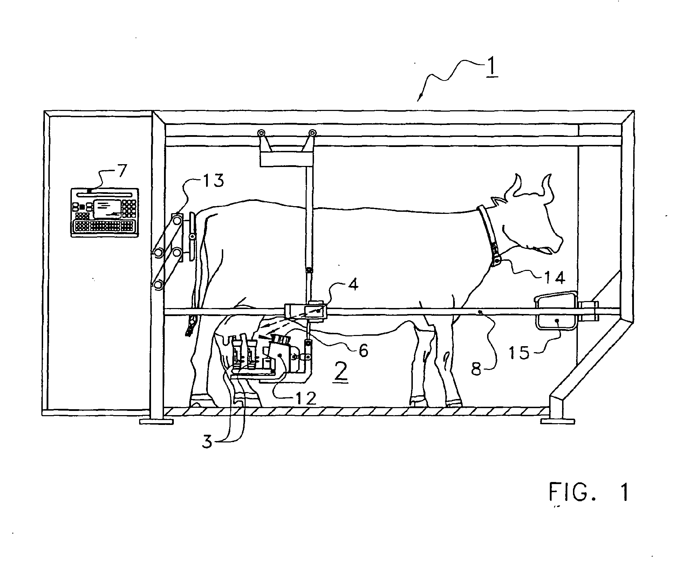

Figure 1 is a side view of a milking device 1 for milking animals provided with a frame 8 and a milking robot 2, which milking robot 2 comprises an arm for connecting a teat cup 3 to a teat of the animal and a displaceable image sensor 4, 6 with a detection range for taking an image, the image sensor 4, 6 being connected to an image analysis device 7, characterized in that the milking device comprises a sight within the detection range of the image sensor 4, 6, in that the image sensor 4, 6 has a viewing direction and is displaceable from a first to a second position, the displacement having a component transverse to the viewing direction, in that the image analysis device 7 is suitable for determining, on the basis of the image, an image distance between the image of the sight and the image of the teat and for emitting an image distance signal representative of the image distance, and in that the milking device 1 comprises a position meter 7 for determining the actual position of the teat relative to the frame 8 on the basis of two image distance signals emitted from the first position, respectively the second position, and on the basis of the first and the second position.

The milking device 1 is depicted as a box in which a cow is located. The frame 8, to which the milking robot 2 is fastened, also constitutes part of the box. An entrance door and an exit door, (not shown in the drawing), are disposed at the other longitudinal side of the box. There is provided a feed trough 15 for supplying feed. The milking robot 2 comprises an arm for connecting the teat cups 3. The arm comprises an end portion 12 to which four teat cups 3 are fastened. By means of the arm, the end portion 12 is capable of being moved from outside the box to under the animal. In order to be able to follow movements of the cow in the longitudinal direction of the box, there is disposed a so-called rear-follower 13. The latter always pushes against the rear side of the cow and is coupled to the arm, so that longitudinal movements of the animal will immediately result in a longitudinal movement of the arm. There is disposed a computer 7 for controlling the box and controlling the milking process. The computer 7 also serves as an image analysis device and as a position meter.

To the end portion 12 of the arm there is fastened a first, central image sensor 6 comprising a camera. This image sensor is capable of being placed, by means of a (non-depicted) displacing device, in a first and in a second position relative to the arm.

A second, lateral image sensor 4 is fastened to the frame 8 of the device. This image sensor is capable of being moved, by means of a (non-depicted) displacing device, in the longitudinal direction of the box. The two displacing devices are capable of being controlled by the computer 7.

The device operates as follows. A cow reports at the milking device 1 and is recognised in a known manner by means of a transponder 14 around her neck and a non-shown identification device. The computer 7 determines whether the animal is allowed to be milked, opens the entrance door and supplies a particular amount of feed. The arm with the end portion 12 is subsequently moved to under the animal.

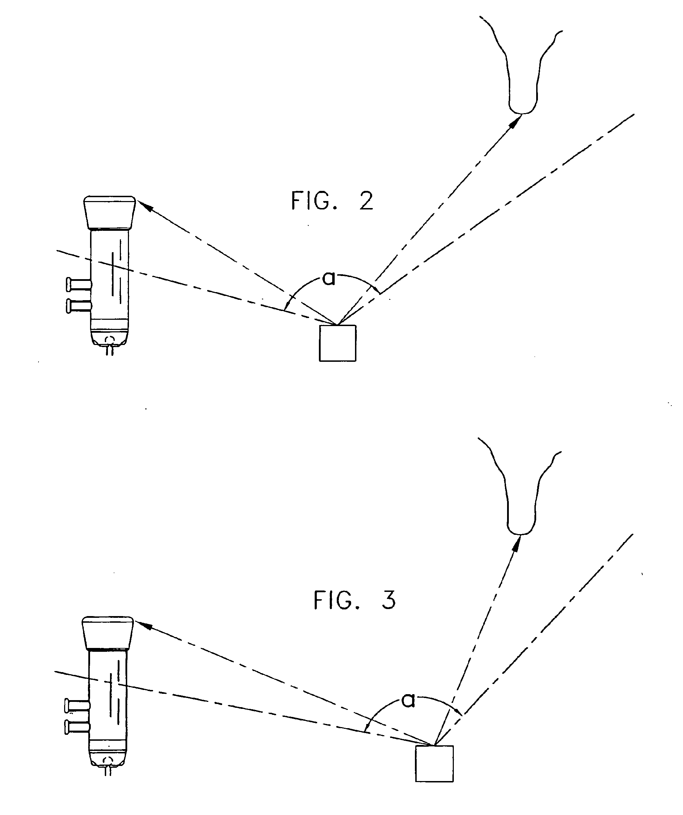

First the position of a teat is determined. For this purpose, the computer 7 moves the lateral teat sensor 4 along the frame 8 in such a way that a single first image is taken of the teat to be connected and of the teat cup 3 which is to be connected to the teat. In this situation, the edge of the relevant teat cup 3 serves as a sight. This position is the first position, as shown diagrammatically in Figure 3. In this figure, the detection range is indicated by *α.* In this situation, the viewing direction is the direction lying in the middle between the two extreme detection limits.

By means of known image analysis techniques, the teat and the sight, i.e. the teat cup 3, are recognised. Subsequently, the first image distance between the top of the teat and the middle of the top of the teat cup 3 is determined in a number of pixel points. Subsequently, the lateral image sensor 4 moves along the frame 8 to a second position, as diagrammatically shown in Figure 3, and determines, in an identical manner, the second image distance in pixel points. Subsequently, the computer 7 determines the actual distance between the teat and the lateral image sensor 4 by means of known geometric techniques, on the basis of the first position, the first image distance, the second position and the second image distance. By means of the same geometric techniques, the computer 7 determines, on the basis of the actual distance, the actual teat position relative to the frame 8 of the milking device 1.

The central image sensor 6 operates in a manner identical to that of the lateral image sensor 4. The two image sensors 4, 6 are also capable of cooperating in such a way that one sensor 4, 6 determines the first image distance and the first position, whereas the other sensor 4, 6 determines the second image distance and the second position.

Now that the exact teat position has been determined, the computer 7 moves the arm with the relevant teat cup 3 to said teat position. Immediately thereafter, the teat cup 3 is moved upwards by the arm, the connection has been completed and the milking process is started. The determination of the positions of the other teats and the subsequent connection take place analogously.

When the milking process has been finished, the teat cups 3 are disconnected in a known manner and the exit door is opened to enable the animal to leave the milking device 1.

In the embodiment described, a teat cup 3 serves as a sight. It is also possible to dispose a separate sight for the purpose.

The milking device 1 described in the exemplary embodiment comprises an arm to which four teat cups 3 are fastened. However, the invention is not limited to such an arm and may also relate, for example, to a gripper type of arm. In the latter case, the teat cups are not permanently connected to the arm, but the arm is designed as a gripper that is capable of connecting or disconnecting the teat cups.

## Claims

1. A milking device (1) for milking animals provided with a frame (8) and a milking robot (2), which milking robot (2) comprises an arm for connecting a teat cup (3) to a teat of the animal and a displaceable image sensor (4, 6) with a viewing direction for taking an image, the image sensor (4, 6) being connected to an image analysis device (7), the image sensor (4, 6) being displaceable from a first to a second position, the displacement having a component transverse to the viewing direction, **characterized in that** the milking device (1) comprises a sight within the detection range of the image sensor (4, 6), the image analysis device (7) being suitable for determining, on the basis of the image, an image distance between the image of the sight and the image of the teat and for emitting an image distance signal representative of the image distance, and **in that** the device (1) comprises a position meter (7) for determining the actual position of the teat relative to the frame (8) on the basis of two image distance signals emitted from the first position, respectively the second position, and on the basis of the first and the second position.

2. A milking device as claimed in claim 1, **characterized in that** the image sensor (6) is fastened to the arm.

3. A milking device as claimed in claim 1 or 2, **characterized in that** the image sensor (4, 6) comprises a camera.

4. A milking device as claimed in claim 1, 2 or 3, **characterized in that** the teat cup (3) comprises the sight.

5. A milking device as claimed in any one of the preceding claims, **characterized in that** the milking device (1) comprises several image sensors (4, 6).

6. A milking device as claimed in any one of the preceding claims, **characterized in that** the milking device (1) comprises means to relate the distance to the teat to the distance to the top of the teat.

7. A method of milking an animal by means of a milking robot (2) provided with a teat cup (3), which milking robot (2) comprises a displaceable image sensor (4, 6) for determining an image of a teat of the animal to be milked, the image sensor (4, 6) having a viewing direction, **characterized in that** the milking robot comprises a sight and the method further comprises the step of:
* taking a first image of the sight and the teat from a first position;
* determining a first image distance between the sight and the teat;
* moving the image sensor (4, 6) to a second position, which second position has a component transverse to the viewing direction;
* taking a second image of the sight and the image sensor (4, 6);
* determining a second image distance between the sight and the teat;
* determining the actual distance between the teat and the image sensor (4, 6) on the basis of the first position, the first image distance, the second position and the second image distance;
* determining the teat position;
* moving the teat cup (3) to the teat position;
* connecting the teat cup (3) to the teat.

8. A method of milking an animal as claimed in claim 7, **characterized in that** the image distance is determined between a specific point of the sight and a specific point of the teat, preferably the teat top.

## Patentansprüche

1. Melkvorrichtung (1) zum Melken von Tieren mit einem Rahmen (8) und einem Melkroboter (2), wobei der Melkroboter (2) einen Arm zum Anschließen eines Zitzenbechers (3) an eine Zitze des Tieres und einen verschiebbaren Bildsensor (4, 6) mit einer Sichtrichtung zum Aufnehmen eines Bildes umfasst, wobei der Bildsensor (4, 6) mit einer Bildanalysiervorrichtung (7) verbunden ist, wobei der Bildsensor (4, 6) aus einer ersten in eine zweite Position verschiebbar ist, wobei die Verschiebung eine quer zur Sichtrichtung verlaufende Komponente hat,
**dadurch gekennzeichnet, dass** die Melkvorrichtung (1) innerhalb des Detektionsbereiches des Bildsensors (4, 6) eine Sichtmarke umfasst, wobei die Bildanalysiervorrichtung (7) geeignet ist, auf der Basis des Bildes einen Bildabstand zwischen dem Bild der Sichtmarke und dem Bild der Zitze zu ermitteln und ein den Bildabstand repräsentierendes Bildabstandssignal auszugeben, und dass die Vorrichtung (1) ein Positionsmessgerät (7) umfasst, um die tatsächliche Position der Zitze relativ zu dem Rahmen (8) auf der Basis der beiden aus der ersten Position bzw. der zweiten Position abgegebenen Bildabstandssignale und auf der Basis der ersten und der zweiten Position zu ermitteln.

2. Melkvorrichtung nach Anspruch 1,
**dadurch gekennzeichnet, dass** der Bildsensor (6) an dem Arm befestigt ist.

3. Melkvorrichtung nach Anspruch 1 oder 2,
**dadurch gekennzeichnet, dass** der Bildsensor (4, 6) eine Kamera umfasst.

4. Melkvorrichtung nach Anspruch 1, 2 oder 3,
**dadurch gekennzeichnet, dass** der Zitzenbecher (3) die Sichtmarke umfasst.

5. Melkvorrichtung nach einem der vorhergehenden Ansprüche,
**dadurch gekennzeichnet, dass** die Melkvorrichtung (1) mehrere Bildsensoren (4, 6) umfasst.

6. Melkvorrichtung nach einem der vorhergehenden Ansprüche,
**dadurch gekennzeichnet, dass** die Melkvorrichtung (1) eine Vorrichtung umfasst, um den Abstand zu der Zitze mit dem Abstand zur Spitze der Zitze in Beziehung zu setzen.

7. Verfahren zum Melken eines Tieres mittels eines mit einem Zitzenbecher (3) versehenen Melkroboters (2), wobei der Melkroboter (2) einen verschiebbaren Bildsensor (4, 6) umfasst, um ein Bild einer Zitze des zu melkenden Tieres zu ermitteln, wobei der Bildsensor (4, 6) eine Sichtrichtung aufweist,
**dadurch gekennzeichnet, dass** der Melkroboter eine Sichtmarke aufweist und das Verfahren ferner folgende Verfahrensschritte umfasst:
- Aufnehmen eines ersten Bildes der Sichtmarke und der Zitze aus einer ersten Position;
- Ermitteln eines ersten Bildabstandes zwischen der Sichtmarke und der Zitze;
- Bewegen des Bildsensors (4, 6) in eine zweite Position, wobei die zweite Position eine sich quer zur Sichtrichtung erstreckende Komponente aufweist;
- Aufnehmen eines zweiten Bildes der Sichtmarke und des Bildsensors (4, 6);
- Ermitteln eines zweiten Bildabstandes zwischen der Sichtmarke und der Zitze;
- Ermitteln des tatsächlichen Abstandes zwischen der Zitze und dem Bildsensor (4, 6) auf der Basis der ersten Position, des ersten Bildabstandes, der zweiten Position und des zweiten Bildabstandes;
- Ermitteln der Zitzenposition;
- Bewegen des Zitzenbechers (3) zu der Zitzenposition;
- Anschließen des Zitzenbechers (3) an die Zitze.

8. Verfahren zum Melken eines Tieres nach Anspruch 7,
**dadurch gekennzeichnet, dass** der Bildabstand zwischen einem bestimmten Punkt der Sichtmarke und einem bestimmten Punkt der Zitze, vorzugsweise der Zitzenspitze, ermittelt wird.

## Revendications

1. Dispositif de traite (1) pour la traite d'animaux, doté d'un châssis (8) et d'un robot de traite (2), ledit robot de traite (2) comprenant un bras pour relier un godet de trayon (3) à un trayon de l'animal et un capteur d'image mobile (4, 6) avec une direction de visualisation pour prendre une image, le capteur d'image (4, 6) étant raccordé à un dispositif d'analyse d'image (7), le capteur d'image (4, 6) pouvant être déplacé d'une première à une deuxième position, le déplacement ayant un composant transversal à la direction de visualisation, **caractérisé en ce que** le dispositif de traite (1) comprend une mire dans la gamme de détection du capteur d'image (4, 6), le dispositif d'analyse d'image (7) étant adapté pour déterminer, sur la base de l'image, une distance d'image entre l'image de la mire et l'image du trayon, et pour émettre un signal de distance d'image représentatif de la distance d'image, et **en ce que** le dispositif (1) comprend un système de mesure de position (7) pour déterminer la position réelle du trayon relativement au châssis (8) sur la base de deux signaux de distance d'image émis de la première position, respectivement de la seconde position, et sur la base de la première et de la seconde positions.

2. Dispositif de traite selon la revendication 1, **caractérisé en ce que** le capteur d'image (6) est fixé au bras.

3. Dispositif de traite selon la revendication 1 ou 2, **caractérisé en ce que** le capteur d'image (4, 6) comprend une caméra.

4. Dispositif de traite selon la revendication 1, 2 ou 3, **caractérisé en ce que** le godet de trayon (3) comprend la mire.

5. Dispositif de traite selon l'une quelconque des revendications précédentes, **caractérisé en ce que** le dispositif de traite (1) comprend plusieurs capteurs d'image (4, 6).

6. Dispositif de traite selon l'une quelconque des revendications précédentes, **caractérisé en ce que** le dispositif de traite (1) comprend des moyens pour lier la distance au trayon à la distance jusqu'en haut de la mamelle.

7. Procédé de traite d'un animal au moyen d'un robot de traite (2) doté d'un godet de trayon (3), ledit robot de traite (2) comprend un capteur d'image mobile (4, 6) pour déterminer une image d'un trayon de l'animal à traire, le capteur d'image (4, 6) ayant une direction de visualisation, **caractérisé en ce que** le robot de traite comprend une mire et le procédé comprend en outre la phase consistant à :
- prendre une première image de la mire et du trayon à partir d'une première position ;
- déterminer une première distance d'image entre la mire et le trayon ;
- déplacer le capteur d'image (4, 6) vers une seconde position, ladite seconde position ayant un composant transversal à la direction de visualisation :
- prendre une seconde image de la mire et du capteur d'image (4, 6) ;
- déterminer une seconde distance d'image entre la mire et le trayon ;
- déterminer la distance réelle entre la mamelle et le capteur d'image (4, 6) sur la base de la première position, de la première distance d'image, de la seconde position et de la seconde distance d'image ;
- déterminer la position du trayon ;
- déplacer le godet de trayon (3) dans la position du trayon ;
- raccorder le godet de trayon (3) au trayon.

8. Procédé de traite d'un animal selon la revendication 7, **caractérisé en ce que** la distance d'image est déterminée entre un point spécifique de la mire et un point spécifique du trayon, de préférence le haut du trayon.
